# EUROPEAN PATENT SPECIFICATION

(11) **EP 2 003 731 B1**
(45) Date of publication and mention of the grant of the patent: **07.05.2014**
(21) Application number: 07720625.8
(22) Date of filing: 30.03.2007
(51) Int. Cl.: H01Q 1/24, H04W 24/00, H04W 88/08

(54) **Method and apparatus for parameter configuration for antenna line device**
Verfahren und Vorrichtung zur Parameterkonfigurierung einer Antennenleitungseinrichtung
Procédé et appareil de configuration des paramètres d'un dispositif de ligne d'antenne

(30) Priority: 05.04.2006 CN 200610072701
(43) Date of publication of application: 17.12.2008
(73) Proprietor: Huawei Technologies Co., Ltd., Longgang District, Shenzhen Guangdong 518129 (CN)
(72) Inventor: DONG, Huajin, Shenzhen Guangdong Province 518129 (CN); WANG, Sheng, Shenzhen Guangdong Povince 518129 (CN)
(74) Representative: Isarpatent
(86) International application number: PCT/CN2007/001051
(87) International publication number: WO 2007/112687

(56) References cited:
- EP-A2- 1 067 626
- EP-A2- 1 225 723
- WO-A2-03/079484
- GB-A- 2 414 137
- JP-A- 2005 079 944
- US-A1- 2006 034 217
- "Control interface for antenna line devices", , 30 July 2004 (2004-07-30), XP008155937, Retrieved from the Internet: URL:http://www.torni.fi/aisg/AISG1_Issue_1 .1.pdf [retrieved on 2012-09-10]

## Description

### Field of the invention

The present invention relates to the field of network communication technologies, and in particular to a method and apparatus for parameter configuration for an antenna line device.

### Background of the Invention

A UniqueID is a global unique identifier of an Antenna Line Device (ALD) in compliance with the Antenna Interface Standards Group (AISG) protocol. The ALD includes an antenna supporting the AISG protocol, a Tower-mounted Amplifier (TMA) and the like. The UniqueID consists of an ALD manufacturer code and a serial number.

An ALD, which functions as a slave station requires an effective parameter configuration management provided by a base station serving as a master station device and the like. There is currently a parameter configuration method for an ALD, in which firstly the UniqueID of an ALD, for which a parameter configuration is required, is input, and then, the parameter configuration is performed for the ALD in a manner as defined by an existing protocol according to the UniqueID, the specific parameters to be configured and the like.

As can be seen from the foregoing descriptions, the related parameter configuration method for an ALD has to be done manually, but in the practical application of a base station, an ALD has to be replaced frequently. In this regard, the current method of the manual parameter configuration gives rise to an increased maintenance effort for the base station, and a high probability of improper operations.

In the related art, there is a device of dual tower mounted amplifiers and the like, available from some ALD manufactures, and this device is also in compliance with the AISG protocol while being provided with one or more UniqueIDs. During the process of the parameter configuration for such a device, the parameter configuration has to be performed for each UniqueID of the device. This results in an increased maintenance effort for the base station. Further, when such a device is added or removed, a phenomenon that a parameter is configured in error may occur if the parameter configuration has not been performed for all the UniqueIDs corresponding to the device.

In summary, the related parameter configuration method for an ALD renders the management by the base station to be in a poor automatic degree.

EP1067626 discloses an antenna system with remote control of the beam tilt. The antenna control system is connected to an antenna in order to control the position of the antenna. The system includes a motor connected to the antenna for adjusting the position or vertical tilt angle of the antenna. A driver is provided for operation the motor. A sensor is also provided to detect the position of the antenna. In addition, an antenna controller is connected to an antenna memory, the driver, and the sensor, for reading the detected position of the antenna and for controlling the driver to adjust the antenna's position. A main controller is connected to the antenna controller for sending commands to and reading data from the antenna controller.

### Summary of the Invention

Embodiments of the disclosure provide a method and apparatus for parameter configuration for an ALD, which can lower the operation and maintenance effort for a master station device, and can be adapted to the management on an ALD provided with one or more UniqueIDs, thus improving the automatic degree of the management by the master station device.

An embodiment of the disclosure provides a method for parameter configuration for an ALD. According to the method, global identification information of an antenna port of a master station device, and corresponding relationship between identification information of an ALD and configuration parameter information is set in the master station, the method including the steps of: obtaining, by the master station device, identification information of one or more ALDs active at an antenna port by scanning the antenna port, according to the set global identification of the antenna port; determining, by the master station device, an ALD for which parameter configuration is required, according to the identification information of the one or more ALDs obtained by the scanning; and determining, by the master station device, a corresponding configuration parameter, according to the corresponding relationship and the identification information of the determined ALD for which parameter configuration is required, and performing parameter configuration for the determined ALD; wherein the identification information of the ALD comprises at least one piece of a group of manufacturer code information of the ALD and device type information of the ALD, and the ALD is provided with one or more UniqueIDs.

Another embodiment of the disclosure further provides a system including an apparatus for parameter configuration for an ALD, the apparatus being disposed in a master station device and including: a first storage module (201) adapted to store global identification information of an antenna port of a master station device; a second storage module (202) adapted to store corresponding relationship between identification information of an ALD and configuration parameter information; a scanning module (204) adapted to scan the antenna port of the master station device according to the global identification information stored in the first storage module, obtain identification information of one or more ALDs active at the antenna port by the scanning and output identification information of an ALD which needs to be configured for parameter; a parameter configuration module adapted to receive the identification information of the ALD which needs to be configured for parameter, determine a configuration parameter corresponding to the received identification information of the ALD according to the corresponding relationship stored in the second storage module (202), and perform parameter configuration for the ALD; wherein the identification information of the ALD comprises at least one piece of a group of manufacturer code information of the ALD and device type information of the ALD, and the ALD is provided with one or more UniqueIDs.

It is apparent from the above descriptions of the technical solutions provided in the embodiments of the invention, the global identification information of the antenna port of the master station device, and the corresponding relationship between the identification information of the ALD and configuration parameter information is preset, and the master station device obtains a UniqueID and a device type of each of the ALDs connected with corresponding antenna port by the scanning, determines the identification information of an ALD for which the parameter configuration is required, according to the identification information of the ALD obtained by the scanning, and performs automatic processing of the parameter configuration for the ALD according to the preset corresponding relationship between the identification information of the ALD and configuration parameter information. Therefore, it is possible to avoid the procedure of manually inputting a UniqueID of the ALD, and the procedure of the manual parameter configuration for the ALDs, and thus the operation and maintenance effort for the master station device is reduced, so that the automatic degree of the management by the master station device is improved.

### Brief Descriptions of the Drawings

Figure 1 is a flow chart of a method for parameter configuration for an ALD according to an embodiment of the disclosure; and
Figure 2 is a schematic diagram of an apparatus for parameter configuration for an ALD according to an embodiment of the disclosure.

### Detailed Descriptions of the Embodiments

In practical applications, ALDs are frequently replaced in a master station device, such as a base station and the like, and these ALDs may be produced by different manufacturers and also be of different types. Any of the ALDs can be provided with one or more UniqueIDs. In order to enhance capability of the master station device to perform a parameter configuration for the ALDs, reduce improper operations during a manual configuration of the parameters and lower a daily maintain effort of the master station device, embodiments of the invention provide a parameter configuration method and apparatus for an ALD. Solutions provided in embodiments of the invention are described below by taking a base device as an example.

According to the embodiments of the invention, firstly the global identification information of antenna ports of the base station is preset, including cabinet information, frame information, slot information, antenna port number information and the like of the base station.

The global identification information of the antenna ports preset here can include the global identification information of all or part of the antenna ports of the base station, or can only include the global identification information of those antenna ports for which a parameter configuration is required.

According to the embodiments of the invention, corresponding relationships between the identification information of ALDs and the parameter configuration information are also preset. The corresponding relationships can include corresponding relationships between the manufacturer code information, the device type of the ALDs and the parameter configuration information, or can include corresponding relationships between UniqueIDs of the ALDs and the parameter configuration information. In other words, the identification information of the ALDs includes the manufacturer information and the device types of the ALDs, and the UniqueIDs of the ALDs also include the manufacturer code information. The AISG protocol defines device type information optionally contained in a scanning result. Of course, the protocol also defines a command word which returns the device type information if no type information is returned after scanning. The current protocol defines four ALD types.

Here, the parameter configuration information can be set according to a practical configuration demand of an ALD, and for instance, can be configuration information of over-current alarm thresholds for the ALDs, reference information of the configuration status for the ALD of the antenna ports to power supply switches, antenna tilt information, configuration information of tower mounted amplifier gains, configuration information of configuration file download for the ALDs and the like.

Corresponding relationships between the identification information of the ALDs and the configuration information of the over-current alarm thresholds for the ALDs can be referred to as a configuration table of ALD over-current alarm thresholds. Corresponding relationships, between the identification information of the ALDs and the reference information of configuration status for the ALDs of the antenna ports to the power supply switches, can be referred to as a reference table of ALD configuration status of the antenna ports to the power supply switches. Corresponding relationships between the identification information of the ALDs and the antenna tilts information can be referred to as a configuration table of antenna tilts. Corresponding relationships between the identification information of the ALDs and the configuration information of the tower mounted amplifier gains can be referred to as a configuration table of tower mounted amplifier gains. Corresponding relationships between the identification information of the ALDs and the configuration information of the configuration file downloads for the ALDs can be referred to as a configuration table of ALD configuration file downloads. The above parameter configuration information is merely exemplary, and the parameter configuration information in the embodiments of the invention shall not be limited to this disclosure. In other words, the embodiments of the invention will not be limited to the above parameter configuration tables, and the configuration information of an ALD is well known, and therefore is not enumerated here.

After the above presetting, the base station initiates a selected antenna port for scanning when a new type of ALD is added at the antenna port so as to obtain the ALDs which are actually active at the selected antenna port. Here, the scanning may be performed by the base station by a binary tree scanning algorithm recommended in the protocol. After the base station completes the scanning, the feature information about an ALD at the selected antenna port will be fed back. Each of the ALDs primarily includes the feature information of a UniqueID of the ALD and a device type of the ALD. Here, the identification information of the ALD includes the manufacturer code and the device type of the ALD contained in the UniqueID of the ALD. If the ALD corresponding to the global identification information of the antenna port preset above is provided with two or more UniqueIDs, then the two or more UniqueIDs of the ALD may be contained in the fed back ALD.

After finishing the scanning successfully, the base station filters out, from the ALDs obtained by the scanning, an ALD which is in no compliance with any preconfigured device type. Regardless of whether the ALD is provided with one or more UniqueIDs, the feature information will be invisible to a user, and thus no further intervention from the user will be required during a subsequent parameter configuration, thus avoiding a manual input ofUniqueID(s).

The parameter configuration performed for each UniqueID of the filtered ALDs is in a manner that specific configuration parameters are determined according to the manufacturer code and the device type of the ALD as well as the configuration parameter corresponding relationships as preset above, and then a parameter configuration is performed accordingly. Thereby the process of the parameter configuration for the ALD is completed. The above specific implementation of the parameter configuration can be accomplished sequentially (after the parameter configuration is finished for one UniqueID, then the parameter configuration is proceeded with for another UniqueID) or in parallel (the parameter configuration is initiated concurrently for multiple UniqueIDs without influence upon each other). The parallel approach can be adopted to reduce the time taken for the parameter configuration. Preferably, addresses of the respective UniqueIDs may be configured after the scanning and before the parameter configuration, so that a normal communication can be enabled subsequently. This procedure has been defined in the protocol, and will not be described here.

The filtering is intended for the purpose that, because an antenna port of the base station may poses a limitation upon the device type of a connected ALD, in order to avoid an access of an ALD of an improper device type to the antenna port of the base station, and thus to improve the management of a parameter configuration for an ALD by the base station, it is also determined whether an ALD connected to the antenna port is of a device type allowed by the antenna port after the antenna port of the base station device is scanned according to the embodiments of the invention. Only if a type of the ALD connected to the antenna port is allowed by the antenna port, the subsequent parameter configuration procedure will be performed. Otherwise, the base station will not perform the parameter configuration management on the ALD.

The above parameter configuration procedure can be applicable to a procedure where parameters are configured for an ALD newly added when the base station adds this ALD, a procedure in which the parameter configuration of an ALD is removed when the base station removes this ALD, and a procedure where the parameter configuration of an ALD is modified when the base station modifies configuration parameters of this ALD already connected to the antenna port.

Moreover, the embodiments of the invention can also be applicable to a forced updating of an ALD active at a designated antenna port.

As can be seen from the foregoing descriptions, the base station according to the embodiments of the invention performs the parameter configuration management on the ALD according to the global identification information of the antenna ports and the corresponding relationships between the global identifiers of the antenna ports and the preconfigured device types. During the process of the parameter configuration of the ALD, no UniqueID is required to be known in advance or be input manually. The base station system is only required to maintain the corresponding relationships between the global identifiers of the antenna ports and the preconfigured device types and the corresponding relationships between the identification information of the ALDs and the configuration parameter information, and this is already sufficient to perform the parameter configuration management on an ALD connected with the base station. Thus, it is possible to avoid the procedure of a manual configuration of ALD parameters by the user, to be adapted effectively to the procedures of replacing an ALD and of updating a parameter configuration by the base station, and to enable a procedure of an automatic parameter configuration for the ALD according to the preset information, which can greatly simplify the daily ALD maintenance and can achieve an automatic parameter configuration management by the base station.

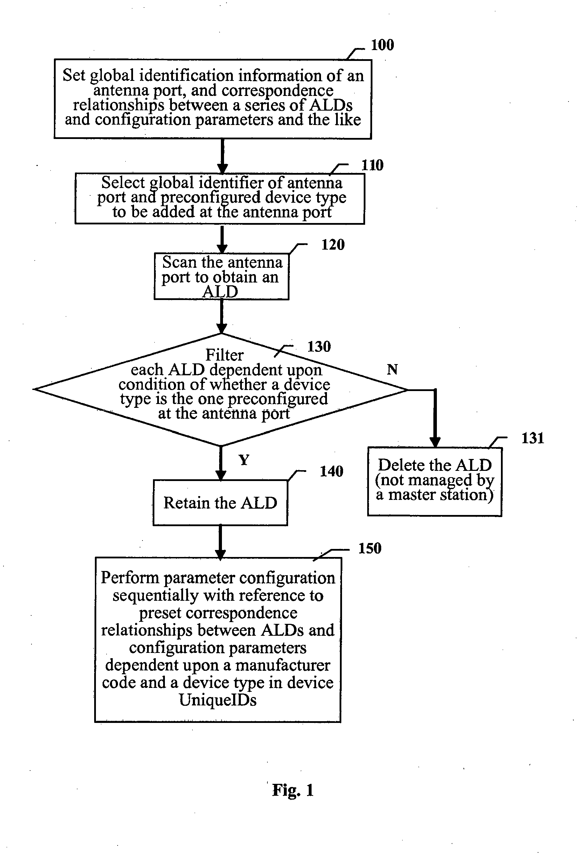

In the following, a flow chart of a method for parameter configuration for an ALD according to an embodiment of the disclosure will be described in detail with reference to Figure 1.

Referring to Figure 1, in step 100, the base station performs configuration maintenance according to global identification information of antenna ports, the corresponding relationships between the global identifiers of the antenna ports and the preconfigured ALD device types, and the corresponding relationships between the ALDs and the configuration parameters. In other words, the base station sets the global identification information of the antenna ports, the corresponding relationships between the global identifier of the antenna ports and the preconfigured ALD device types, and the corresponding relationships between the identification information of the ALDs and the configuration parameter information. The global identifiers of the antenna ports typically consist of numbers of a cabinet, a frame, a slot, and an antenna port. The current protocol defines four ALD device types.

In step 110, upon a need of adding an ALD, the base station selects global identification information of an antenna port corresponding to the ALD to be added from the global identification information of the antenna ports, and defines ALD device types allowed for configuration. Here, the device types shall not be beyond a scope of the types as defined in the protocol.

In step 120, the base station scans the antenna port, for instance by the binary tree scanning algorithm recommended in the protocol, and the feature information of one or more ALDs active at the antenna port is fed back when the scanning is completed.

In step 130, it is determined whether a device type of the ALD to be added is a device type allowed by the antenna port according to the above global identification information of the antenna port. If the ALD is not of a device type allowed by the antenna port, step 131 is performed, where the base station does not perform the parameter configuration management on the ALD fed back by the scanning, and then the processes according to the embodiment of the invention ends.

If it is determined in step 130 that the ALD is of a device type allowed by the antenna port, step 140 is performed, where the base station retains the ALD.

In step 150, the base station determines specific configuration parameters and performs the parameter configuration for each filtered ALD according to the preset corresponding relationships between the identification information of the ALDs and the configuration parameter information.

The above corresponding relationships between the identification information of the ALDs and the configuration parameter information could includes a configuration table of ALD over-current alarm thresholds, a reference table of ALD configuration status of antenna ports to the power supply switches, a configuration table of antenna tilts, a configuration table of tower mounted amplifier gains, a configuration table of ALD configuration file downloads.

A method for using a configuration table is described as follows with an example of a method for using a configuration table of ALD over-current alarm thresholds.

Contents set in a configuration table of ALD over-current alarm thresholds are ALD manufacturer codes, ALD device types and preconfigured over-current alarm thresholds. The base station firstly determines the manufacturer information of the ALD, i.e. the manufacturer code information, according to the UniqueID of the ALD to be added, then searches for a configuration table of ALD over-current alarm thresholds according to the manufacturer code information and the device type of the ALD, next synthetically calculates an over-current alarm threshold which shall be configured for the antenna port, and thereafter performs the parameter configuration according to the over-current alarm threshold. A specific calculation formula can be customized by respective base station device providers.

Upon a need of replacing an ALD, the base station firstly performs an operation of removing the parameter configuration, and then performs an operation of adding the parameter configuration. The removal procedure is substantially the same as the above described flow, and will not be described here in detail.

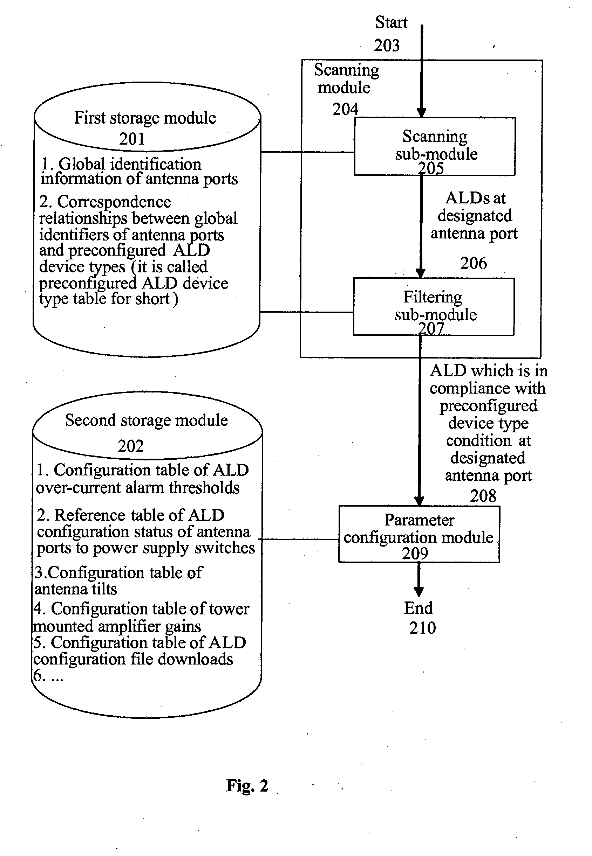

An apparatus for parameter configuration for an ALD according to an embodiment of the invention is illustrated in Figure 2. The apparatus for parameter configuration for an ALD primarily includes a first storage module, a second storage module, a scanning module, and a parameter configuration module.

The first storage module is primarily adapted to store the global identification information of the antenna ports and the corresponding relationships between the global identifiers of the antenna ports and types of the preconfigured ALD device.

The second storage module is primarily adapted to store the corresponding relationships between the identification information of the ALDs and the configuration parameter information. The second storage module consists of one or more of a first storage sub-module, a second storage sub-module, a third storage sub-module, a fourth storage sub-module and a fifth storage sub-module.

The first storage sub-module is primarily adapted to store corresponding relationships between the identification information of the ALDs and the configuration information of over-current alarm thresholds for the ALDs, i.e. a configuration table of ALD over-current alarm thresholds. The second storage sub-module is primarily adapted to store corresponding relationships between the identification information of the ALDs and the reference information of configuration status for ALD of antenna ports to power supply switches, i.e. storing a reference table of ALD configuration status of antenna ports to the power supply switches. The third storage sub-module is primarily adapted to store corresponding relationships between the identification information of the ALDs and antenna tilts, i.e. storing a configuration table of antenna tilts. The fourth storage sub-module is primarily adapted to store corresponding relationships between the identification information of the ALDs and the configuration information of the tower mounted amplifier gains, i.e. storing a configuration table of tower mounted amplifier gains. The fifth storage sub-module is primarily adapted to store corresponding relationships between the identification information of the ALDs and the configuration information of configuration file downloads for the ALDs, i.e. storing a configuration table of ALD configuration file downloads.

The information stored in the second storage module is set according to actual parameter configuration demands of the ALDs. In other words, the information stored in the second storage module is not limited to the above descriptions, and particularly, it refers to the method as described above.

The scanning module is primarily adapted to scan an antenna port of the master station device according to the global identification information of the antenna ports stored in the first storage module, and to obtain the ALDs of the corresponding antenna port.

The scanning module includes a scanning sub-module and a filtering sub-module.

The scanning sub-module is primarily adapted to scan the antenna port of the base station according to the global identification information of the antenna ports stored in the first storage module, and then UniqueIDs and device types of respective ALDs obtained by the scanning in corresponding to the global identification information of the antenna ports are transmitted to the filtering sub-module. Here, the scanning can be performed by the binary tree scanning algorithm recommended in the protocol, and can be particularly as described in the method embodiment of the invention.

The filtering sub-module is primarily adapted to filter the ALDs active at the antenna port obtained by the scanning by the scanning module, according to the information of the preconfigured ALD device types stored in the first storage module, so as to determine whether a device type of an ALD active at the antenna port, which is obtained by the scanning by the scanning module, is in accordance with a requirement, that is, to determine whether the device type of the ALD active currently at the antenna port is an ALD type for which the configuration is allowed at the antenna port. Upon determination that the device type of the ALD obtained by the scanning is in accordance with such an ALD type for which the configuration is allowed at the antenna port, the filtering sub-module obtains the manufacturer code information from the UniqueID of the ALD, and transmits the manufacturer code information and the device type of the ALD to the parameter configuration module. Upon determination that the device type of the ALD obtained by the scanning is in no compliance with any ALD type for which the configuration is allowed at the antenna port, the filtering sub-module does not transmit the manufacturer code information and the device type of the ALD to the parameter configuration module, that is, does not perform the parameter configuration management on the ALD, particularly as described in the method embodiment of the invention.

The parameter configuration module is primarily adapted to determine configuration parameters corresponding to the received UniqueID of the ALD, according to the corresponding relationships stored in the second storage module, and to perform the parameter configuration for the corresponding ALD. Here, the parameter configuration includes a parameter configuration performed for an added ALD, a parameter configuration performed for a removed ALD, and a parameter configuration modification performed for an ALD for which the modification of configuration parameters is required.

As can be seen from the above descriptions of the embodiments, in the embodiments of the invention, the global identification information of the antenna ports of the master station device, and the corresponding relationships between the identification information of the ALDs and the configuration parameter information are preset. The master station device obtains the UniqueIDs and the device types of the ALDs connected with the corresponding antenna port by the scanning, and then determines the identification information of the ALD for which the parameter configuration is required according to the identification information of the ALDs obtained by the scanning, and performs an automatic processing of a parameter configuration for the ALD according to the preset corresponding relationships between the identification information of the ALDs and the configuration parameter information. Therefore, it is possible to avoid the procedure of the manual parameter configuration for the ALD, and to lower the operation and maintenance effort for the master station device. Through setting the preconfigured ALD device types corresponding to the global identification information of the antenna ports of the master station device, it is possible to avoid the phenomenon that an ALD is connected improperly to the master station device. In the embodiments of the invention, the automatic processing of a parameter configuration can be performed for an ALD to be added by the master station device, an ALD to be removed by the master station device, an ALD for which configuration parameters are to be modified by the master station device and the like. Thus, the automatic degree of the management by the master station device can be improved with the technical solutions provided by the embodiments of the invention.

While the invention has been described in conjunction with the embodiments, those skilled in the art will appreciate that various modifications and variations made to the invention are possible without departing the scopes of the invention, and that such modifications and variations are encompassed by the appended claims of the invention.

## Claims

1. A method for parameter configuration for an Antenna Line Device, ALD, therein global identification information of an antenna port of a master station device, and corresponding relationship between identification information of an ALD and configuration parameter information are set in a master station, and the method comprises:
obtaining identification information of one or more ALDs active at an antenna port by scanning the antenna port, according to the set global identification information of the antenna port;
determining an ALD which is required to be configured, according to the identification information of the one or more ALDs obtained by the scanning; and
determining a corresponding configuration parameter, according to the corresponding relationship and the identification information of the ALD which is required to be configured, and performing parameter configuration for the determined ALD;
**characterized by** the identification information of the ALD comprises at least one piece of a group of manufacturer code information of the ALD and device type information of the ALD, and the ALD is provided with one or more UniqueIDs.

2. The method according to claim 1, **characterized in that** the global identification information of the antenna port comprises:
cabinet information, frame information, slot information and antenna port number information of the master station device; or
site information, cabinet information, frame information, slot information and antenna port number information of the master station device.

3. The method according to claim 1, **characterized in that** the configuration parameter information comprises at least one piece of a group of configuration information of over-current alarm thresholds for the ALD, reference information of configuration status for the ALD of the antenna port to a power supply switches, antenna tilt information, configuration information of a tower mounted amplifier gains and configuration information of configuration file downloads for the ALD; and
wherein the corresponding relationship between identification information of an ALD and configuration parameter information comprises at least one of:
corresponding relationship between the identification information of the ALD and the configuration information of the over-current alarm thresholds for the ALD;
corresponding relationship between the identification information of the ALD and the reference information of configuration status for the ALD of the antenna port to the power supply switches;
corresponding relationship between the identification information of the ALD and the antenna tilts information;
corresponding relationship between the identification information of the ALD and the configuration information of the tower mounted amplifier gains; and
corresponding relationship between the identification information of the ALD and the configuration information of the configuration file downloads for the ALD.

4. The method according to claim 1, 2 or 3, wherein the obtaining identification information of one or more ALDs comprises:
scanning the antenna port according to the set global identification information of the antenna port, and obtaining device type information of the one or more ALDs active at the antenna port.

5. The method according to claim 1, 2 or 3, wherein the obtaining identification information of one or more ALDs comprises:
scanning the antenna port according to the set global identification information of the antenna port, and obtaining a device type and a UniqueID of each of the one or more ALDs active at the antenna port;
determining manufacturer code information of the ALDs according to the obtained UniqueID.

6. The method according to claim 4 or 5, **characterized in that** device type information of an ALD which is allowed to be configured at the antenna port is set in the master station; and
wherein the determining an ALD which is required to be configured comprises:
filtering the device type information of the one or more ALDs active at the antenna port, according to the device type information of the ALD which is allowed to be configured;
storing the identification information of an active ALD, if the device type of the active ALD is in accordance with the device type information of the ALD which is allowed to be configured at the antenna port; and
determining the ALD which is required to be configured, according to the stored identification information of the active ALD.

7. The method according to claim 1, 2 or 3, **characterized in that** the ALD which is required to be configured comprises at least one of a group of an ALD to be added, an ALD to be deleted, and an ALD whose configuration parameter requires modification.

8. An apparatus for parameter configuration for an Antenna Line Device, ALD, comprising:
a first storage module (201) adapted to store global identification information of an antenna port of a master station device;
a second storage module (202) adapted to store corresponding relationship between identification information of an ALD and configuration parameter information;
a scanning module (204) adapted to scan the antenna port of the master station device according to the global identification information stored in the first storage module (201), obtain identification information of one or more ALDs active at the antenna port and output identification information of an ALD which needs to be configured for parameter; and
a parameter configuration module (209) adapted to receive the identification information of the ALD which needs to be configured for parameter, determine a configuration parameter corresponding to the received identification information of the ALD according to the corresponding relationship stored in the second storage module (202), and perform parameter configuration;
**characterized by** the identification information of the ALD comprises at least one piece of a group of manufacturer code information of the ALD and device type information of the ALD, and the ALD is provided with one or more UniqueIDs.

9. The apparatus according to claim 8, **characterized in that** the second storage module (202) comprises at least one of a group of:
a first storage sub-module adapted to store corresponding relationship between the identification information of the ALD and configuration information of over-current alarm thresholds for the ALD;
a second storage sub-module adapted to store corresponding relationship between the identification information of the ALD and reference information of configuration status for the ALD of the antenna port to power supply switches;
a third storage sub-module adapted to store corresponding relationship between the identification information of the ALD and antenna tilts;
a fourth storage sub-module adapted to store corresponding relationship between the identification information of the ALD and configuration information of a tower mounted amplifier gains; and
a fifth storage sub-module adapted to store corresponding relationship between the identification information of the ALD and configuration information of configuration file downloads for the ALD.

10. The apparatus according to claim 8 or 9, **characterized in that** the first storage module (201) is further adapted to store corresponding relationship between the global identification information of the antenna port and preconfigured ALD device type, and wherein the scanning module (204) comprises:
a scanning sub-module (205) adapted to scan the antenna port of the master station device according to the global identification information of the antenna port of the master station device stored in the first storage module (201), and obtain device type information and a UniqueID of each of the one or more ALDs active at the antenna port;
a filtering sub-module (207) adapted to filter the obtained device type information of the one or more ALDs active at the antenna port, according to the preconfigured ALD device types stored in the first storage module (201), and transmit a device type and a UniqueID of an active ALD to the parameter configuration module (209), if the device type of the active ALD is in accordance with one of the device types of ALDs allowed to be configured at the antenna port.

## Patentansprüche

1. Verfahren zur Parameterkonfiguration für eine Antennenleitungsvorrichtung, ALD, worin die globalen Identifikationsinformationen eines Antennenanschlusses einer Masterstationsvorrichtung und die entsprechende Beziehung zwischen den Identifikationsinformationen einer ALD und Konfigurationsparameterinformationen in einer Masterstation eingestellt sind, und wobei das Verfahren Folgendes umfasst:
Erhalten von Identifikationsinformationen einer oder mehrere ALDs, die an einem Antennenanschluss aktiv sind, durch Abtasten des Antennenanschlusses gemäß den eingestellten globalen Identifikationsinformationen des Antennenanschlusses;
Bestimmen einer ALD, für die es erforderlich ist, dass sie gemäß den Identifikationsinformationen der einen oder mehreren ALDs, die durch das Abtasten erhalten werden, konfiguriert wird; und
Bestimmen eines entsprechenden Konfigurationsparameters gemäß der entsprechenden Beziehung und den Identifikationsinformationen der ALD, für die es erforderlich ist, dass sie konfiguriert wird, und Ausführen der Parameterkonfiguration für die bestimmte ALD;
**dadurch gekennzeichnet, dass** die Identifikationsinformationen der ALD wenigstens eines aus einer Gruppe aus den Herstellercodeinformationen der ALD und den Vorrichtungstypinformationen der ALD umfassen, und dass die ALD mit einer oder mehreren eindeutigen IDs versehen ist.

2. Verfahren nach Anspruch 1, **dadurch gekennzeichnet, dass** die globalen Identifikationsinformationen des Antennenanschlusses Folgendes umfassen:
Schrankinformationen, Rahmeninformationen, Steckplatzinformationen und Antennenanschlussnummerinformationen der Masterstationsvorrichtung; oder Standortinformationen, Schrankinformationen, Rahmeninformationen, Steckplatzinformationen und Antennenanschlussnummerinformationen der Masterstationsvorrichtung.

3. Verfahren nach Anspruch 1, **dadurch gekennzeichnet, dass** die Konfigurationsparameterinformationen wenigstens eines aus einer Gruppe aus Konfigurationsinformationen von Überstromalarmschwellenwerten für die ALD, Referenzinformationen des Konfigurationsstatus für die ALD des Antennenanschlusses zu einem Stromversorgungsschalter, Antennenneigungsinformationen, Konfigurationsinformationen von Verstärkungsfaktoren eines als Turm montierten Verstärkers und Konfigurationsinformationen von heruntergeladenen Konfigurationsdateien für die ALD umfassen; und
wobei die entsprechende Beziehung zwischen den Identifikationsinformationen einer ALD und den Konfigurationsparameterinformationen wenigstens eines von Folgendem umfasst:
eine entsprechende Beziehung zwischen den Identifikationsinformationen der ALD und den Konfigurationsinformationen des Überstromalarmschwellenwerts für die ALD;
eine entsprechende Beziehung zwischen den Identifikationsinformationen der ALD und den Referenzinformationen des Konfigurationsstatus für die ALD des Antennenanschlusses zu den Stromversorgungsschaltern;
eine entsprechende Beziehung zwischen den Identifikationsinformationen der ALD und den Antennenneigungsinformationen;
eine entsprechende Beziehung zwischen den Identifikationsinformationen der ALD und den Konfigurationsinformationen der Verstärkungsfaktoren des als Turm montierten Verstärkers; und
eine entsprechende Beziehung zwischen den Identifikationsinformationen der ALD und den Konfigurationsinformationen der heruntergeladenen Konfigurationsdateien für die ALD.

4. Verfahren nach Anspruch 1, 2 oder 3, wobei das Erhalten von Identifikationsinformationen einer oder mehrerer ALDs Folgendes umfasst:
Abtasten des Antennenanschlusses gemäß den eingestellten globalen Identifikationsinformationen des Antennenanschlusses und Erhalten von Vorrichtungstypinformationen einer oder mehrerer ALDs, die an dem Antennenanschluss aktiv sind.

5. Verfahren nach Anspruch 1, 2 oder 3, wobei das Erhalten von Identifikationsinformationen einer oder mehrerer ALDs Folgendes umfasst:
Abtasten des Antennenanschlusses gemäß den eingestellten globalen Identifikationsinformationen des Antennenanschlusses und Erhalten eines Vorrichtungstyps und einer eindeutigen ID jeder der einen oder mehreren ALDs, die an dem Antennenanschluss aktiv sind;
Bestimmen von Herstellercodeinformationen der ALDs gemäß der erhaltenen eindeutigen ID.

6. Verfahren nach Anspruch 4 oder 5, **dadurch gekennzeichnet, dass** die Vorrichtungstypinformationen einer ALD, die an dem Antennenanschluss konfiguriert sein darf, in der Masterstation eingestellt werden; und
wobei das Bestimmen einer ALD, für die es erforderlich ist, dass sie konfiguriert wird, Folgendes umfasst:
Filtern der Vorrichtungstypinformationen der einen oder mehreren ALDs, die an dem Antennenanschluss aktiv sind, gemäß den Vorrichtungstypinformationen der ALD, die konfiguriert werden darf;
Speichern der Identifikationsinformationen einer aktiven ALD, wenn der Vorrichtungstyp der aktiven ALD in Übereinstimmung mit den Vorrichtungsinformationen der ALD ist, die an dem Antennenanschluss konfiguriert werden darf; und
Bestimmen der ALD, für die es erforderlich ist, dass sie konfiguriert wird, gemäß den gespeicherten Identifikationsinformationen der aktiven ALD.

7. Verfahren nach Anspruch 1, 2 oder 3, **dadurch gekennzeichnet, dass** die ALD, für die es erforderlich ist, dass sie konfiguriert wird, wenigstens eine aus einer Gruppe einer ALD, die hinzugefügt werden soll, einer ALD, die gelöscht werden soll und einer ALD, deren Konfigurationsparameter eine Änderung erfordern, umfasst.

8. Einrichtung zur Parameterkonfiguration für eine Antennenleitungsvorrichtung, ALD, die Folgendes umfasst:
ein erstes Speichermodul (201), ausgelegt zum Speichern von globalen Identifikationsinformationen eines Antennenanschlusses einer Masterstationsvorrichtung;
ein zweites Speichermodul (202), ausgelegt zum Speichern einer entsprechenden Beziehung zwischen Identifikationsinformationen einer ALD und Konfigurationsparameterinformationen;
ein Abtastmodul (204), ausgelegt zum Abtasten des Antennenanschlusses der Masterstationsvorrichtung gemäß den globalen Identifikationsinformationen, die in dem ersten Speichermodul (201) gespeichert sind, Erhalten von Identifikationsinformationen einer oder mehrerer ALDs, die an dem Antennenanschluss aktiv sind, und Ausgeben von Identifikationsinformationen einer ALD, deren Parameter konfiguriert werden müssen; und
ein Parameterkonfigurationsmodul (209), ausgelegt zum Empfangen von Identifikationsinformationen der ALD, deren Parameter konfiguriert werden müssen, Bestimmen eines Konfigurationsparameters entsprechend den empfangenen Identifikationsinformationen der ALD gemäß der entsprechenden Beziehung, die in dem zweiten Speichermodul (202) gespeichert ist, und Ausführen der Parameterkonfiguration;
**dadurch gekennzeichnet, dass** die Identifikationsinformationen der ALD wenigstens eines aus einer Gruppe aus den Herstellercodeinformationen der ALD und den Vorrichtungstypinformationen der ALD umfassen und dass die ALD mit einer oder mehreren eindeutigen IDs versehen ist.

9. Einrichtung nach Anspruch 8, **dadurch gekennzeichnet, dass** das zweite Speichermodul (202) wenigstens eines aus einer Gruppe enthält, die besteht aus:
einem ersten Speicher-Teilmodul, ausgelegt zum Speichern einer entsprechenden Beziehung zwischen den Identifikationsinformationen der ALD und Konfigurationsinformationen von Überstromalarmschwellenwerten für die ALD;
einem zweiten Speicher-Teilmodul, ausgelegt zum Speichern einer entsprechenden Beziehung zwischen den Identifikationsinformationen der ALD und Referenzinformationen des Konfigurationsstatus für die ALD des Antennenanschlusses zu Stromversorgungsschaltern;
einem dritten Speicher-Teilmodul, ausgelegt zum Speichern einer entsprechenden Beziehung zwischen den Identifikationsinformationen der ALD und Antennenneigungen;
einem vierten Speicher-Teilmodul, ausgelegt zum Speichern einer entsprechenden Beziehung zwischen den Identifikationsinformationen der ALD und Konfigurationsinformationen von Verstärkungsfaktoren eines als Turm montierten Verstärkers; und
einem fünften Speicher-Teilmodul, ausgelegt zum Speichern einer entsprechenden Beziehung zwischen den Identifikationsinformationen der ALD und Konfigurationsinformationen von heruntergeladenen Konfigurationsdateien für die ALD.

10. Einrichtung gemäß Anspruch 8 oder 9, **dadurch gekennzeichnet, dass** das erste Speichermodul (201) ferner zum Speichern einer entsprechenden Beziehung zwischen den globalen Identifikationsinformationen des Antennenanschlusses und dem vorkonfigurierten ALD-Vorrichtungstyp ausgelegt ist, und wobei das Abtastmodul (204) Folgendes umfasst:
ein Abtast-Teilmodul (205), ausgelegt zum Abtasten des Antennenanschlusses der Masterstationsvorrichtung gemäß den globalen Identifikationsinformationen des Antennenanschlusses der Masterstationsvorrichtung, die in dem ersten Speichermodul (201) gespeichert sind, und zum Erhalten von Vorrichtungstypinformationen und einer eindeutigen ID jeder der einen oder mehreren ALDs, die an dem Antennenanschluss aktiv sind;
ein Filter-Teilmodul (207), ausgelegt zum Filtern der erhaltenen Vorrichtungstypinformationen der einen oder mehreren ALDs, die an dem Antennenanschluss aktiv sind, gemäß den vorkonfigurierten ALD-Vorrichtungstypen, die in dem ersten Speichermodul (201) gespeichert sind, und zum Übertragen eines Vorrichtungstyps und einer eindeutigen ID einer aktiven ALD zu dem Parameterkonfigurationsmodul (209), wenn der Vorrichtungstyp der aktiven ALD in Übereinstimmung ist mit einem der Vorrichtungstypen von ALDs, die an dem Antennenanschluss konfiguriert werden dürfen.

## Revendications

1. Procédé de configuration de paramètres d'un dispositif de ligne d'antenne, ALD, où des informations d'identification globales d'un port d'antenne d'un dispositif de station maîtresse, et une relation de correspondance entre des informations d'identification d'un ALD et des informations de paramètres de configuration sont définies dans une station maîtresse, le procédé comprenant les étapes suivantes :
obtenir des informations d'identification d'un ou plusieurs ALD actifs au niveau d'un port d'antenne en balayant le port d'antenne conformément aux informations d'identification globales définies du port d'antenne ;
déterminer un ALD qui doit être configuré, conformément aux informations d'identification d'un ou plusieurs ALD obtenues par le balayage ; et
déterminer un paramètre de configuration correspondant, conformément à la relation de correspondance et aux informations d'identification de l'ALD qui doit être configuré, et procéder à une configuration de paramètres pour l'ALD déterminé ;
**caractérisé en ce que** les informations d'identification de l'ALD comprennent au moins une partie d'un groupe d'informations de code de fabricant de l'ALD et d'informations de type de dispositif de l'ALD, et l'ALD est pourvu d'un ou plusieurs ID uniques.

2. Procédé selon la revendication 1, **caractérisé en ce que** les informations d'identification globales du port d'antenne comprennent :
des informations d'armoire, des informations de châssis, des informations de fente et des informations de numéro de port d'antenne du dispositif de station maîtresse ; ou
des informations de site, des informations d'armoire, des informations de châssis, des informations de fente et des informations de numéro de port d'antenne du dispositif de station maîtresse.

3. Procédé selon la revendication 1, **caractérisé en ce que** les informations de paramètres de configuration comprennent au moins une partie d'un groupe comprenant des informations de configuration de seuils d'alarme de surintensité pour l'ALD, des informations de référence d'état de configuration pour l'ALD du port d'antenne vers des commutateurs d'alimentation électrique, des informations d'inclinaison d'antenne, des informations de configuration de gains d'amplificateur de pylône et des informations de configuration de téléchargements de fichier de configuration pour l'ALD ; et
dans lequel la relation de correspondance entre des informations d'identification d'un ALD et des informations de paramètres de configuration comprend au moins une relation parmi les suivantes :
une relation de correspondance entre les informations d'identification de l'ALD et les informations de configuration des seuils d'alarme de surintensité pour l'ALD ;
une relation de correspondance entre les informations d'identification de l'ALD et les informations de référence d'état de configuration pour l'ALD du port d'antenne vers les commutateurs d'alimentation électrique ;
une relation de correspondance entre les informations d'identification de l'ALD et les informations d'inclinaison d'antenne ;
une relation de correspondance entre les informations d'identification de l'ALD et les informations de configuration des gains d'amplificateur de pylône ; et
une relation de correspondance entre les informations d'identification de l'ALD et les informations de configuration des téléchargements de fichiers de configuration pour l'ALD.

4. Procédé selon les revendications 1, 2 ou 3, dans lequel l'obtention des informations d'identification d'un ou plusieurs ALD comprend les étapes suivantes :
balayer le port d'antenne conformément aux informations d'identification globales définies du port d'antenne, et obtenir des informations de type de dispositif d'un ou plusieurs ALD actifs au niveau du port d'antenne.

5. Procédé selon les revendications 1, 2 ou 3, dans lequel l'obtention des informations d'identification d'un ou plusieurs ALD comprend les étapes suivantes :
balayer le port d'antenne conformément aux informations d'identification globales définies du port d'antenne, et obtenir un type de dispositif et un ID unique de chacun des un ou plusieurs ALD actifs au niveau du port d'antenne ;
déterminer des informations de code de fabricant des ALD conformément à l'ID unique obtenu.

6. Procédé selon la revendication 4 ou la revendication 5, **caractérisé en ce que** les informations de type de dispositif d'un ALD qui est autorisé à être configuré au niveau du port d'antenne sont définies dans la station maîtresse ; et
dans lequel, déterminer un ALD qui doit être configuré comprend les étapes suivantes :
filtrer les informations de type de dispositif de l'un ou plusieurs ALD actifs au niveau du port d'antenne, conformément aux informations de type de dispositif de l'ALD qui est autorisé à être configuré ;
stocker les informations d'identification d'un ALD actif, si le type de dispositif de l'ALD actif est en accord avec les informations de type de dispositif de l'ALD qui est autorisé à être configuré au niveau du port d' antenne ; et
déterminer l'ALD qui doit être configuré, conformément aux informations d'identification stockées de l'ALD actif.

7. Procédé selon les revendications 1, 2 ou 3, **caractérisé en ce que** l'ALD qui doit être configuré comprend au moins un ALD parmi un groupe comprenant un ALD à ajouter, un ALD à supprimer et un ALD dont les paramètres de configuration nécessitent une modification.

8. Appareil de configuration de paramètres pour un dispositif de ligne d'antenne, ALD, comprenant :
un premier module de stockage (201) conçu pour stocker des informations d'identification globales d'un port d'antenne d'un dispositif de station maîtresse ;
un deuxième module de stockage (202) conçu pour stocker une relation de correspondance entre des informations d'identification d'un ALD et des informations de paramètres de configuration ;
un module de balayage (204) conçu pour balayer le port d'antenne du dispositif de station maîtresse conformément aux informations d'identification globales stockées dans le premier module de stockage (201), obtenir des informations d'identification d'un ou plusieurs ALD actifs au niveau du port d'antenne et délivrer en sortie des informations d'identification d'un ALD qui doit être configuré au niveau de ses paramètres ; et
un module de configuration de paramètres (209) conçu pour recevoir les informations d'identification de l'ALD qui doit être configuré au niveau de ses paramètres,
déterminer un paramètre de configuration correspondant aux informations d'identification reçues de l'ALD conformément à la relation de correspondance stockée dans le deuxième module de stockage (202), et procéder à une configuration de paramètres ;
**caractérisé en ce que** les informations d'identification de l'ALD comprennent au moins une partie d'un groupe d'informations de code de fabricant de l'ALD et
d'informations de type de dispositif de l'ALD, et l'ALD est pourvu d'un ou plusieurs ID uniques.

9. Appareil selon la revendication 8, **caractérisé en ce que** le deuxième module de stockage (202) comprend au moins un groupe constitué de :
un premier sous-module de stockage conçu pour stocker une relation de correspondance entre les informations d'identification de l'ALD et des informations de configuration des seuils d'alarme de surintensité pour l'ALD ;
un deuxième sous-module de stockage conçu pour stocker une relation de correspondance entre les informations d'identification de l'ALD et des informations de référence d'état de configuration pour l'ALD du port d'antenne vers des commutateurs d'alimentation électrique ;
un troisième sous-module de stockage conçu pour stocker une relation de correspondance entre les informations d'identification de l'ALD et des inclinaisons d' antenne ;
un quatrième sous-module de stockage conçu pour stocker une relation de correspondance entre les informations d'identification de l'ALD et des informations de configuration de gains d'amplificateur de pylône ; et
un cinquième sous-module de stockage conçu pour stocker une relation de correspondance entre les informations d'identification de l'ALD et des informations de configuration de téléchargements de fichiers de configuration pour l'ALD.

10. Appareil selon la revendication 8 ou la revendication 9, **caractérisé en ce que** le premier module de stockage (201) est en outre conçu pour stocker une relation de correspondance entre les informations d'identification globales du port d'antenne et un type de dispositif ALD préconfiguré, et où le module de balayage (204) comprend :
un sous-module de balayage (205) conçu pour balayer le port d'antenne du dispositif de station maîtresse conformément aux informations d'identification globales du port d'antenne du dispositif de station maîtresse stockées dans le premier module de stockage (201), et obtenir des informations de type de dispositif et un ID unique de chacun des un ou plusieurs ALD actifs au niveau du port d' antenne ;
un sous-module de filtrage (207) conçu pour filtrer les informations de type de dispositif obtenues des un ou plusieurs ALD actifs au niveau du port d'antenne,
conformément aux types de dispositif ALD préconfigurés stockés dans le premier module de stockage (201), et transmettre un type de dispositif et un ID unique d'un ALD actif au module de configuration de paramètres (209), si le type de dispositif de l'ALD actif est en accord avec un des types de dispositif des ALD autorisés à être configurés au niveau du port d'antenne.
